# EUROPEAN PATENT APPLICATION

(11) **EP 1 247 689 A1**
(43) Date of publication of application: **09.10.2002**
(21) Application number: 02006310.3
(22) Date of filing: 21.03.2002
(51) Int. Cl.: B60N 2/46

(54) **Operator enclosure with armrest**

(30) Priority: 04.04.2001 US 825726
(71) Applicant: DEERE & COMPANY, Moline, Illinois 61265-8098 (US)
(72) Inventor: Clevenger, William Andrew, Knoxville,TN 37921 (US)
(74) Representative: Magin, Ludwig Bernhard

(57) **Abstract**

Small work vehicles such as skid steer loaders are commonly provided with operator enclosures that surround the operator and protect them from injury. This protection is provided by rollover structures, seat belts and metal screening over the windows. With such protection, the operator seating area is confining and access to it is available only from the front of the vehicle.

An armrest structure (20) is provided for use in vehicle operator enclosures that have limited space. It is mounted to the sidewall (18) rather than to the seat (16) and is pivotable between lowered and raised positions to provide greater clearance for entry into and exit from the enclosure and/or has an armrest member (62) which ergonomically configured to support the operator's arm and hand and minimize fatigue as he manipulates the hand controls.

## Description

The present invention relates to an operator enclosure for a vehicle having a seat, an enclosure side wall adjacent the seat, a control member located in front of the seat and to one side thereof and an armrest structure.

Small work vehicles such as skid steer loaders are commonly provided with operator enclosures that surround the operator and protect them from injury. This protection is provided by rollover structures, seat belts and metal screening over the windows. With such protection, the operator seating area is confining and access to it is available only from the front of the vehicle.

When the operator enters the seating area, he must turn around within it to sit down and fasten the seat belt. Since most operator seats are provided with armrests that serve to support the operator's arms and hands as he manipulates separate hand controls such as levers, those armrests further hamper entry into and exit from the operator enclosure.

Present armrests that are coupled with the operator seat move with the seat as it is adjusted fore and aft to accommodate the particular operator's size and preferences. This results in the armrest being positioned at various distances from the hand control levers. As the operator manipulates the control levers fore and aft, the varying location of the armrest can result in it not providing support, thereby increasing the level of arm and wrist fatigue.

Since the hand control levers on a skid steer loader are commonly manipulated in the fore and aft direction, the armrests must serve to support the sliding movement of the operator's arm. Frequently, the shape of the armrest interferes with such movement, thereby further increasing the fatigue levels experienced.

It would therefore be desirable to provide an armrest structure for an operator enclosure that provides for entry from the front, such as are frequently provided in skid steer loader, front mount mowers and/ or zero turn radius vehicles.

With the present invention, there is provided an armrest structure that improves access into and out of the operator seating area, permits easier access to the seatbelt, allows operators of different sizes to be comfortably seated adjacent to it, comfortably accommodates the operator's elbow and forearm along its length and is positioned at the desired distance from the control lever to provide the desired spacing between the operator's hand and the hand control lever that serves to minimize hand and wrist fatigue.

The armrest structure that is attached to the operator enclosure side wall rather than the seat so that additional space is available for entry and exit.

It would further be desirable to provide an armrest structure that is pivotable between a lower operating position and a vertically extending raised position to increase clearance for entering and exiting the enclosure, as well as to allow easier access to buckling and/or unbuckling a seatbelt.

It would also be desirable to provide an armrest structure that is positioned in the desired spaced relationship to the hand control lever so that it supports the operator's arm as he manipulates the control. It would as well be desirable to provide the armrest with an elongated upper surface formed to comfortably receive the operator's forearm along its length so that it allows sliding movement of his elbow and forearm as he manipulates the control lever.

It would further be desirable to provide the armrest with an inside vertical edge surface that is spaced from the operator to provide additional clearance for variations in body size of different operators as well as provide clearance during entry and exit and improve access to the seatbelt elements.

Figure 1 is a front right elevated perspective schematic view of an operator enclosure utilizing the armrest structure of the present invention.

Figure 2 is a right side schematic view of the operator enclosure illustrating the armrest structure and hand control lever linkage on the left side of the operator enclosure.

Figure 3 is a view similar to Figure 2 illustrating the hand control lever in its forward position.

Figure 4 is a view similar to Figures 2 and 3, but illustrating the armrest structure in its raised position.

Figure 5 is an enlarged front elevated perspective view of the armrest structure.

Figure 6 is a front left enlarged perspective view of the armrest structure.

Figure 7 is an enlarged side schematic view of the armrest structure illustrating the jackscrew mechanism utilized for adjusting the vertical position of the forward portion of the armrest member.

Figure 8 is a view similar to Figure 6, but illustrating the armrest structure in a front and elevated perspective.

Figure 9 is a view similar to Figure 8, but illustrating the armrest structure from a front perspective.

Figure 10 is a plan view of the armrest member illustrated in Figures 6, 7, 8 and 9.

Figure 11 is a schematic perspective illustrating an operator's forearm seated in the armrest and the control lever in its rearward position.

Figure 12 is a schematic perspective illustrating an operator's forearm seated in the armrest, the control lever in its forward position and the operator's forearm slid forwardly on the armrest member.

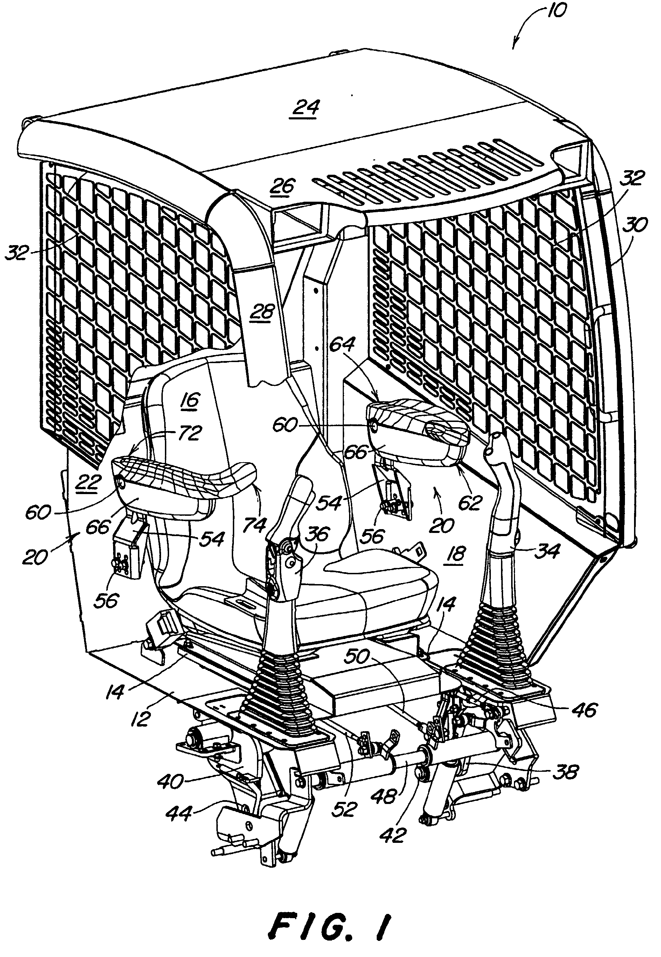

Looking first to Figure 1, there is illustrated a schematic front perspective view of an operator enclosure 10 for vehicles such as the skid steer loader of the preferred embodiment. The enclosure includes a floor 12 upon which are mounted slides 14 that carry an operator seat 16. The seat 16 is adjustable on the slides 14 to permit it to be moved between incremented fore and aft spaced positions along the floor 12. The operator enclosure 10 further includes side walls 18 of which the left side wall 18 is shown and the right side wall is cut away in order to better illustrate the enclosure 10 and the armrest structure 20. Behind the operator seat 16 is a rear wall 22 and above it is a roof 24 with a forward extending canopy 26. A rollover protection structure (ROPS) is provided and is composed of upstanding and rearwardly extending tubular members 28 and 30 respectively on the left and right sides to form the forward and top edges of the enclosure 10. Covering each of the side window areas are punched metal screens 32 configured to inhibit the entry of foreign materials and objects into the operator enclosure 10.

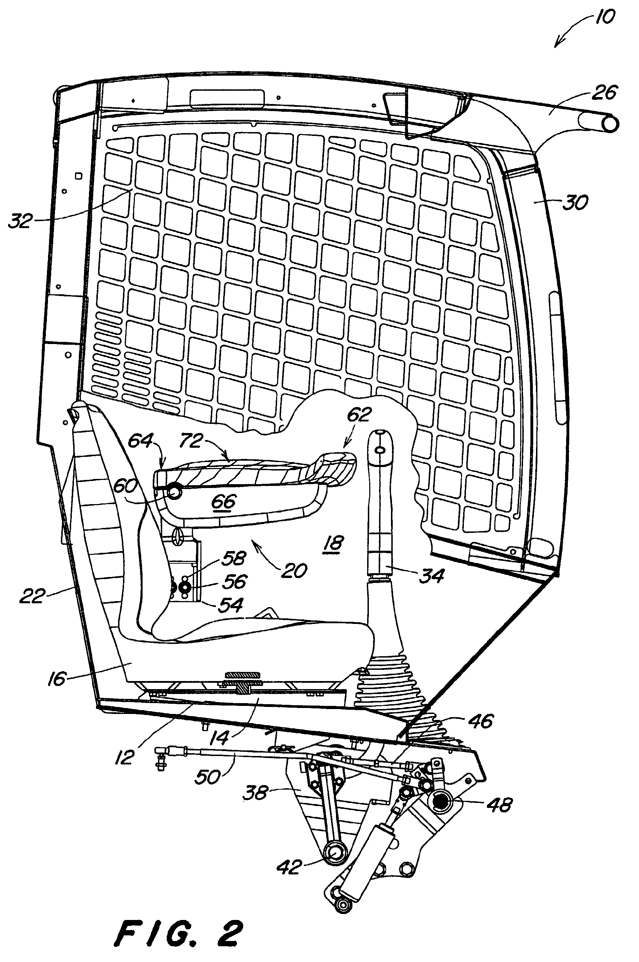

At the forward edge of the operator enclosure 10 are carried left and right hand control levers or control members 34 and 36 for manipulation of the drive wheels on the skid steer vehicle. Each of the control levers 34 and 36 are supported on respective yolks 38 and 40, as best illustrated in Figures 2, 3 and 4 for fore and aft movement about transverse pivot shafts 42 and 44 to allow for control of the respective motors for the left and right wheels on the vehicle. Figures 2, 3 and 4 illustrate the left hand control lever 34 in its rearward, forward and mid position. As is seen best in Figures 1 and 2, the yokes 38 and 40 that support the control levers 34 and 36 are attached through respective linkages, only the left linkage 46 being illustrated, to a steering shaft 48 that extends transversely across the forward edge of the operator enclosure 10 beneath the floor 12. The steering shaft 48 in turn carries respective left and right control linkages 50 and 52 that extend to pumps (unshown) which operate the two wheel motors for the skid steer loader. Accordingly, fore and aft movement of the control levers 34 and 36 results in fore and aft movement of the yolks 38 and 40 and their attached linkages 50 and 52 to control the drives for the wheels.

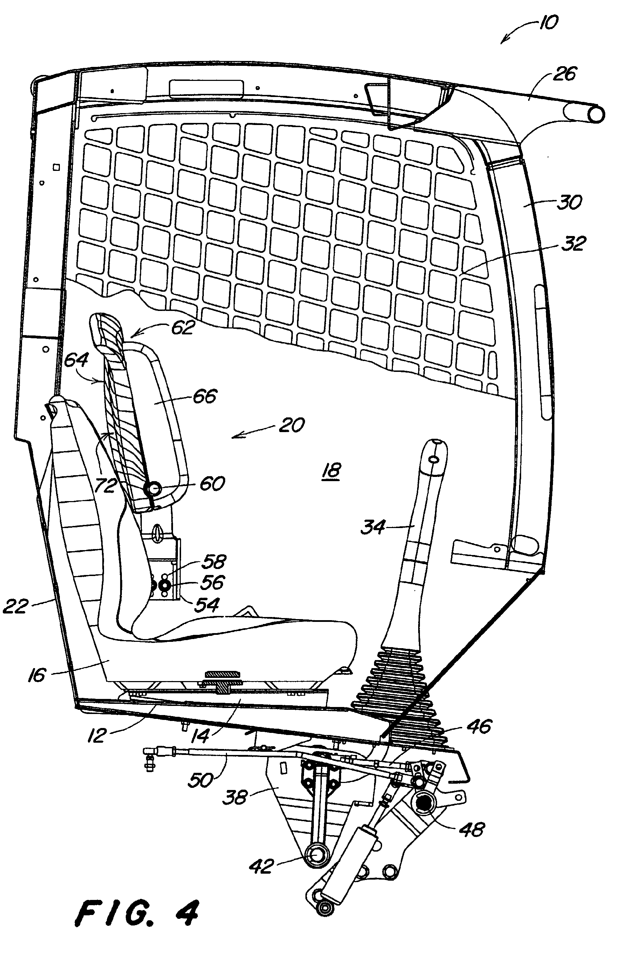

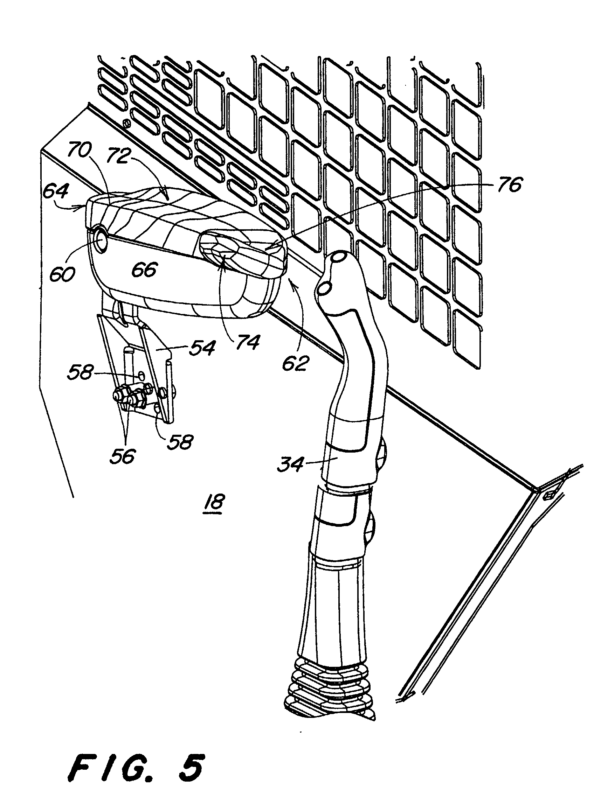

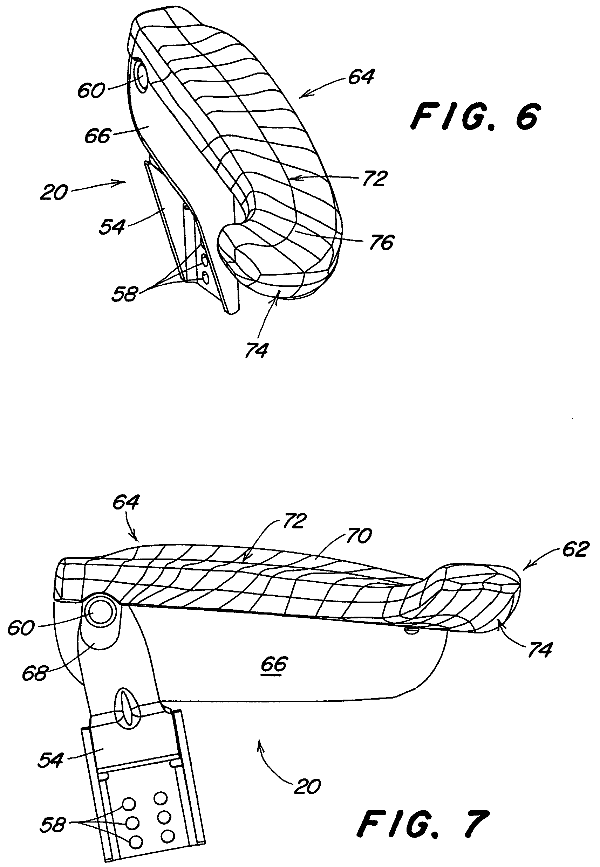

Returning to Figure 1 and looking as well as Figure 5, there is illustrated the armrest structure 20 of the present invention. The left and right armrest structures 20 are mirror images of one another and therefore only the one on the left side wall 18 need be discussed in detail. The armrest structure 20 as illustrated in the enlarged view of Figure 5 includes a bracket 54 which is secured to the side wall 18 with bolts, screws or similar fasteners 56. In the preferred embodiment, three sets of vertical openings 58 are provided for two spaced apart bolts 56 that secure the bracket 54 to the wall 18. This allows the bracket 54 to be positioned in one of three vertical positions. The bracket 54 carries at its upper end a pivot structure 60 that extends generally transversely to the direction of movement of the vehicle. The armrest member 62 is mounted on the pivot structure 60 for swinging movement between the lowered position illustrated as Figure 1 and the raised position illustrated in Figure 4. The armrest member 62 is preferably constructed of upper and lower elements 64 and 66 which are plastic or composite material. The upper element 64, upon which the operator's elbow, forearm and wrist rest, is secured to a pivot bracket 68 which is swingably covered on the pivot structure 60 (see Figure 7). The upper element 64 is generally L-shaped in the preferred embodiment and includes a first fore and aft extending leg portion 70 having a fore and aft extending trough or U-shaped surface 72 that is configured to receive the operator's elbow, forearm and wrist for sliding movement. At the forward end of the upper member 64 is a transversely extending second leg portion 74 which curves slightly upwardly at its end portion. The transverse leg portion 74 also includes a fore and aft extending U-shaped surface 76 that is an extension of the U-shaped surface 72 on the first leg portion 70 of the armrest member 62. The second leg portion 74 of the upper element 64 is adapted to allow the operator to center his wrist and forearm in the trough or bottom of the U-shaped surface 72 as he slides his arm fore and aft during manipulation of the control lever 34.

The lower element 66 of the armrest member 62 comprises a cover for an arrangement that enables vertical swinging adjustment of the forward end of the armrest member 62 to suit the preferred elevation of a particular operator. The arrangement can be a conventional armrest adjustment structure that incrementally adjusts the forward end of the armrest member 62 upwardly or downwardly. Accordingly, it allows vertical adjustment of the forward end of the member 62 about its rearward pivot structure 60.

Looking now to Figures 6, 8 and 9, it can be seen that the upper surface of the armrest member is configured with the trough or U-shaped configuration 72 described earlier to allow the elbow, forearm and wrist of the operator to rest therein comfortably and slide fore and aft as the control lever 34 is moved between the positions illustrated in Figures 2, 3 and 4.

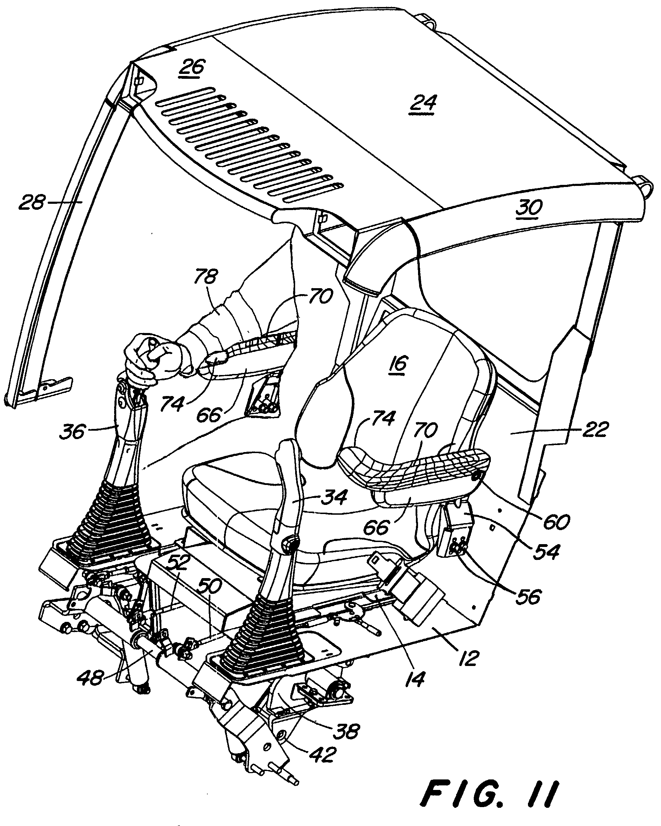

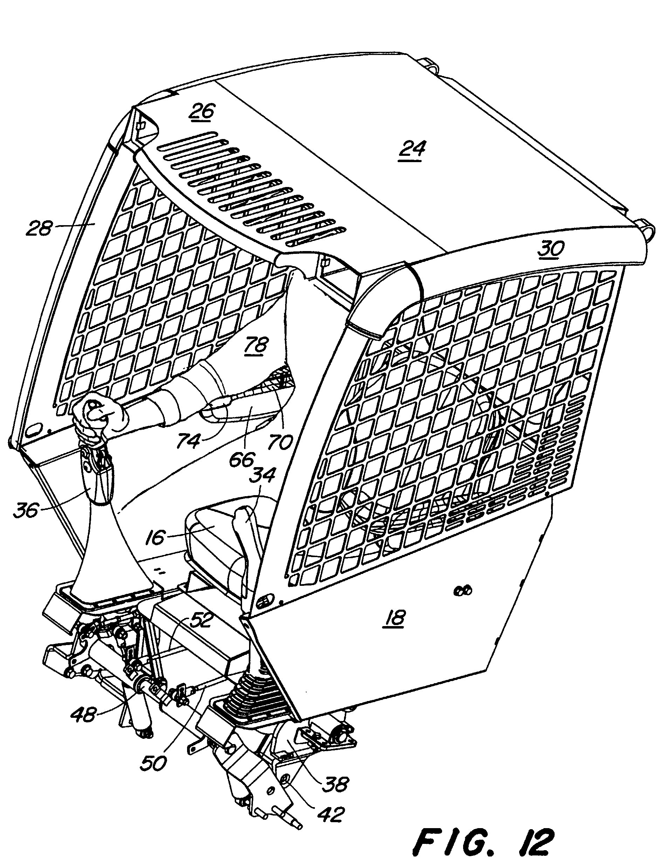

Looking to Figures 11 and 12, there are illustrated in schematic form the positions of the operator's arm 78 on the armrest member 62 when the control lever 34 is respectively in its rearward and forward positions. As can be seen in these Figures 11 and 12, the operator's arm 78 is positioned in fore and aft alignment with the control lever 34 so that it can easily be manipulated in the fore and aft direction.

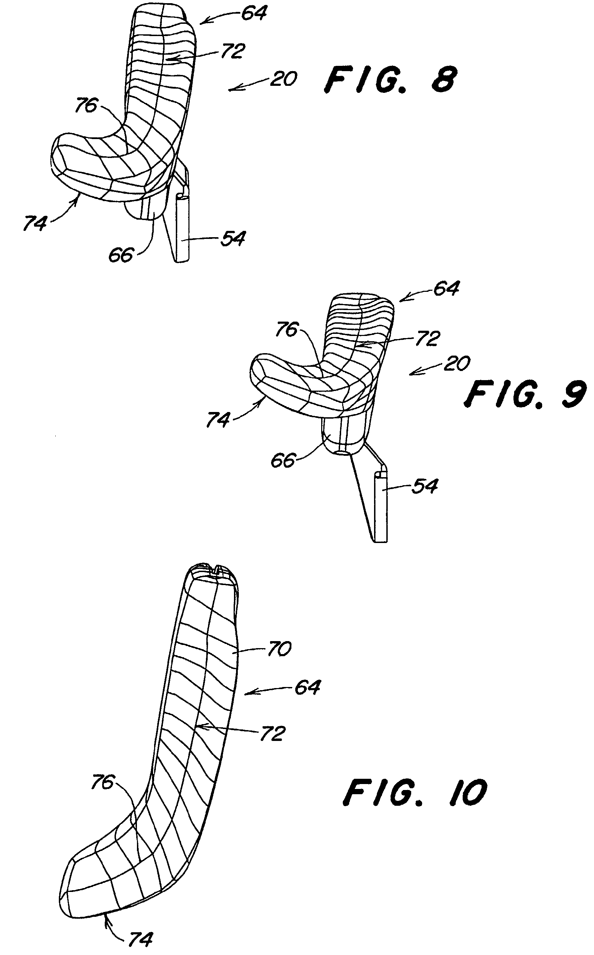

Looking back to the plan view of the armrest member 62 illustrated in Figure 10, it can be seen that it is spaced away from the operator chair 16 to provide additional clearance between the chair 16 and the armrest member 62. This provides the operator with greater and easier access to seat belts or other control elements within the operator enclosure 10.

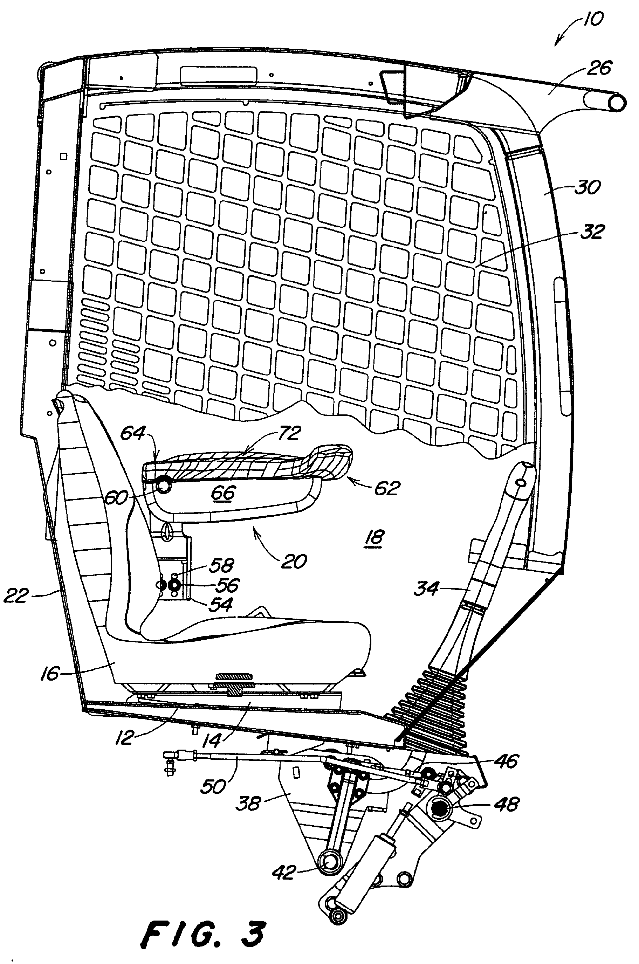

To provide additional clearance in the somewhat confining operator enclosure 10 typical to skid steer loaders, the armrest structure 20 is provided with the pivotal mounting 60 which permits it to be moved between the lowered operational position depicted in Figure 3 and a raised, out of the way position illustrated in Figure 4. In this manner, the armrest member 62 can be moved to minimize the interference it might cause as an operator moves into or out of the enclosure 10 and/or attaches or detaches the seatbelt elements.

With the present armrest structure, there is provided an ergonomically designed armrest surface for receiving the elbow, forearm and wrist of the operator that permits that operator to shift his hand forwardly and rearwardly to manipulate the control lever, which supports the arm as the hand is shifted forwardly, thereby minimizing the amount of fatigue that would be incurred by the operator during long hours of operating the vehicle and in particular the skid steer loader of the present preferred embodiment. Further there is provided an operator armrest structure which facilitates additional space for the operator seating area to accommodate varying sizes of operators and which can be raised to a vertical and out of the way position to provide additional space for entry into and exit from the operator enclosure.

A conventional arrangement can be provided at the lower edge of the armrest to permit its forward end to be raised or lowered slightly about its rear pivot structure support point to accommodate individual operator preferences for positioning of the armrest structure in relation to the control levers.

Having described the preferred embodiment, it will become apparent that various modifications can be made without departing from the scope of the invention as defined in the accompanying claims.

## Claims

1. Operator enclosure (10) for a vehicle having a seat (16), an enclosure side wall (18) adjacent the seat (16), a control member (34, 36) located in front of the seat and to one side thereof and an armrest structure (20),
**characterized in that** a mounting bracket (54) is fixed to the side wall (18), an armrest member (62) is secured to the bracket (54) generally fore and aft spaced of the control member (34, 36), said armrest member (62) including an elongated fore and aft extending armrest surface (72) having a generally upwardly opening U-shape.

2. Operator enclosure according to claim 1, **characterized in that** the bottom of the fore and aft extending U-shaped surface (72) is generally fore and aft aligned with the control member (34, 36).

3. Operator enclosure according to claim 1 or 2,
**characterized in that** the control member (34, 36) is adapted for fore and aft movement.

4. Operator enclosure according to one or several of the previous claims, **characterized in that** the armrest member (62) is configured in a generally L-shape with the elongated fore and aft extending surface (72) comprising the first leg portion (70) and a generally transversely extending forward end comprising a second leg portion (74).

5. Operator enclosure according to one or several of the previous claims, **characterized in that** the second leg (74) portion is provided with a fore and aft extending U-shaped surface (76) that is generally aligned with the elongated U-shaped surface (72) of the first leg portion (70).

6. Operator enclosure according to one or several of the previous claims, **characterized in that** the mounting bracket (54) includes a generally transverse pivot structure (60) and that an armrest member (62) is secured to the pivot structure (60) for swinging movement between a first lowered and second raised position.

7. Operator enclosure according to one or several of the previous claims, **characterized in that** the armrest member further being provided with a support portion at its forward end which includes a second fore and aft extending U-shaped surface (74) aligned with and joining the upwardly opening U-shaped first elongated surface (72).
